# EUROPÄISCHE PATENTSCHRIFT

(11) **EP 2 768 117 B1**
(45) Veröffentlichungstag und Bekanntmachung des Hinweises auf die Patenterteilung: **23.01.2019**
(21) Anmeldenummer: 13155626.8
(22) Anmeldetag: 18.02.2013
(51) Int. Cl.: H02K 1/24, H02K 15/02, H02K 19/06, H02K 41/03, H02K 1/02

(54) **Läufer einer Reluktanzmaschine**
Rotor of a reluctance machine
Rotor d'une machine à reluctance

(43) Veröffentlichungstag der Anmeldung: 20.08.2014
(73) Patentinhaber: Siemens Aktiengesellschaft, 80333 München (DE)
(72) Erfinder: Vollmer, Rolf, 36129 Gersfeld (DE); Mader, Daniel, 97616 Bad Neustadt a.d. Saale (DE)

(56) Entgegenhaltungen:
- EP-A2- 1 734 639
- JP-A- 2006 246 571

## Beschreibung

Läufer einer Reluktanzmaschine und dynamoelektrische Reluktanzmaschine mit einem Läufer, der aus ferromagnetisch geschichteten Blechen aufgebaut ist.

Dynamoelektrische Reluktanzmaschine sind Synchronmaschinen mit einem speziellen Läufer. Dabei werden durch breite eingefräste Nuten Lücken in einem Läufer geschaffen und wegen der dann unterschiedlichen Luftspalte unter den Polen eines Stators der dynamoelektrischen Reluktanzmaschine werden magnetische Vorzugsrichtungen erzeugt, mit denen das umlaufende Drehfeld des Stators synchronisiert. Grundsätzlich benötigen Reluktanzmaschinen unterschiedliche Induktivitäten in der Längs- und Querachse des Läufers. Dabei ist die d-Achse die Rotorflussachse. Die q-Achse ist 90 Grad elektrisch gegenüber der d-Achse gedreht. Je größer die Differenz aus den beiden Induktivitäten ist, umso größer ist die Drehmomentkonstante der Maschine.

Aus der US 3 671 789 ist ein Reluktanzmotor bekannt, dessen Läufer mittels axial verlaufender Bleche versucht unterschiedliche Induktivitäten herzustellen.

**Aus der** EP 1 734 639 A2 **ist eine dynamoelektrische Reluktanzmaschine bekannt, mit aus ferromagnetischen Blechen axial geschichteten Blechpaket, wobei abwechselnd magnetische und amagnetische Bereiche in den Blechen des Blechpaketes vorhanden sind, wobei die amagnetischen Bereiche durch a-magnetische Strukturen realisiert sind, die durch Ausgießen oder aus Druckguss hergestellt werden. Nachteilig dabei ist, dass das Ausgießen oder der Druckguss einen aufwändigen Verarbeitungsprozess erfordern.**

Mit einer derartigen Ausgestaltung lassen sich keine nennenswerten Drehmomente einer dynamoelektrischen Reluktanzmaschine erzielen.
Ausgehend davon liegt der Erfindung die Aufgabe zugrunde, einen Läufer eines Reluktanzmotors zu schaffen, der bei vergleichsweise höherer Anisotropie geringere Oberwelligkeit in einem Drehmomentspektrum der dynamoelektrische Reluktanzmaschine aufweist.
Die Lösung der gestellten Aufgabe gelingt durch einen Läufer einer dynamoelektrischen Reluktanzmaschine, mit:
- einem aus ferromagnetischen Blechen geschichteten Blechpaket,
- mit abwechselnd magnetischen und amagnetischen Bereichen in den Blechen dieses Blechpakets, wobei die amagnetischen Bereiche durch amagnetische Strukturen realisiert sind, die mittels metallischem Stoffschluss in vorgegebenen Abschnitten der Bleche angeordnet sind.
- wobei bei dem metallischen Stoffschluss, amagnetische Metallpartikel in oder an die ferromagnetischen Abschnitte eines jeden Einzelbleches dotiert werden.
Die Lösung der gestellten Aufgabe gelingt auch durch eine dynamoelektrische Reluktanzmaschine mit einem Läufer mit einem aus ferromagnetischen Blechen geschichteten Blechpaket, das abwechselnd magnetische und amagnetische Bereiche in den Blechen dieses Blechpakets vorsieht, wobei die amagnetischen Bereiche durch amagnetische Strukturen realisiert sind, die mittels metallischem Stoffschluss in vorgegebenen Abschnitten der Bleche angeordnet sind, wobei bei dem metallischen Stoffschluss, amagnetische Metallpartikel in oder an die ferromagnetischen Abschnitte eines jeden Einzelbleches dotiert werden, mit:
- einem Stator mit einem Wicklungssystem, das über einen Luftspalt hinweg mit dem Läufer elektromagnetisch wechselwirkt,
- in Bewegungsrichtung des Läufers abwechselnd magnetischen und amagnetischen Bereiche, die dem Luftspalt der Reluktanzmaschine zugewandt sind.
Durch metallischen Stoffschluss zwischen den amagnetischen und magnetischen Strukturen im Übergangsbereich dieser Stoffe wird dort im Vergleich zu den bekannten Läufern von Reluktanzmaschinen die Festigkeit des Einzelbleches erhöht. Unter metallischem Stoffschluss werden Schweißverbindungen, Lötverbindungen und im Sinne der Erfindung stoffschlüssiges Dotieren von amagnetischen Metallpartikeln in oder an die ferromagnetischen Abschnitte des Einzelblechs verstanden.

Unter einer Dotierung im Sinne der Erfindung wird das gezielte Einbringen von amagnetischen Metallpartikeln in vorgegebenen Bereichen verstanden, die den magnetischen Widerstand erhöhen und somit eine q-Achse des Läufers der Reluktanzmaschine bilden.

Unter amagnetisch werden dabei Stoffe verstanden, die eine Permeabilitätszahl µᵣ < 1,5 aufweisen. Die Permeabilitätszahl µᵣ ist das Verhältnis von magnetischer Leitfähigkeit µ zur magnetischen Feldkonstanten µ₀.

Im Gegensatz zu Blechen mit ausgestanzten Schlitzen kann nunmehr auf die Verbindungsstege zwischen den magnetischen Bereichen verzichtet werden. Damit wird eine vergleichsweise höhere magnetische Anisotropie erreicht, was zu verbesserten Eigenschaften der dynamoelektrischen Reluktanzmaschine führt. Mit anderen Worten, die Differenz der Induktivitäten von q- und d-Achse vergrößert sich. Dies führt unter anderem zu einer Steigerung der Drehzahl und eines höheren Drehmoments bei rotatorischen Reluktanzmaschinen als auch eine vergleichsweise größeren Kraftentfaltung bei linearen Reluktanzmaschinen.

Dies wird insbesondere durch die erfindungsgemäßen größeren Induktivitätsunterschiede in der d- und q- Achse des Läufers erreicht. In der d-Achse tritt ein geringer magnetischer Widerstand auf und der Fluss wird in diese Richtung im Blech sehr gut geführt. Elektrisch rechtwinklig dazu in der q-Achse behindern die amagnetischen Strukturen den magnetischen Fluss. Diese amagnetischen Strukturen sind mit den magnetischen Bereichen des jeweiligen Blechs mittels metallischem Stoffschluss verbunden.

Je stärker also der Fluss in der q-Achse behindert wird und je besser der Fluss in der d-Achse geführt wird, desto größer ist das erreichbare Drehmoment des Reluktanzmotors.

Des Weiteren kann nunmehr in einfacher Art und Weise dem Läufer ein geometrisch runder Umfang gegeben werden. Das hat zur Folge, dass zwar der Umfang des Läufers geometrisch rund ausgeführt ist aber dennoch magnetisch unrund ist. Dieser gleichmäßige Luftspalt führt zu reduzierter Luftreibung und erhöht somit die Effizienz der Reluktanzmaschine.

Insbesondere durch das stoffschlüssige Dotieren der gezielten Bereiche eines Blechs kann nunmehr der magnetische Leitwert der einzelnen Bleche des Läufers gezielt eingestellt werden. Damit lässt sich nunmehr gezielt die Drehmomentenwelligkeit der Reluktanzmaschine beeinflussen und somit reduzieren.
Des Weiteren lassen sich durch stoffschlüssiges Dotieren der amagnetischen Strukturen diese sehr fein und filigran ausführen, so dass nunmehr auch vergleichsweise kleine Bleche, die bisher in der stanztechnisch nicht geschlitzt ausgeführt werden konnten, eine einstellbare Anisotropie der Bleche erhalten.

Somit lassen sich nun besonders für Reluktanz-Kleinstantriebe Läufer in einfacher Art und Weise herstellen.
Durch vergleichsweise viele feine amagnetische Strukturen in einem Blech lässt sich nunmehr in der q-Achse ein vergleichsweise großer magnetischer Widerstand aufbauen. In der d-Achse ist ein vergleichsweise geringer magnetischer Widerstand vorhanden. Diese höhere Anisotropie führt zu geringerer Oberwelligkeit der Reluktanzmaschine, was zu einer weiteren verbesserten Motoreigenschaft, wie höhere Drehzahl und höheres Drehmoment führt.
Unter dieser magnetischen Anisotropie, wird dabei verstanden, dass die Bleche des Läufers eine Vorzugsrichtung bzw. Vorzugsebene für die Magnetisierung aufweisen.
Der erfinderische Gedanke kann somit bei Läufern rotatorischer und linearer Reluktanzmaschinen unabhängig von ihren geometrischen Abmessungen und Leistungsklassen umgesetzt werden.
Die amagnetischen Bereiche bilden dabei Flusssperren.

Die Erfindung sowie weitere vorteilhafte Ausgestaltungen der Erfindung werden anhand prinzipiell dargestellter Ausführungsbeispiele näher erläutert. Darin zeigen:
- FIG 1: einen Reluktanzlinearantrieb,
- FIG 2: einen rotatorischen Reluktanzmotor,
- FIG 3 bis 5: mögliche Ausführungsform eines Läufers eines Reluktanzmotors.

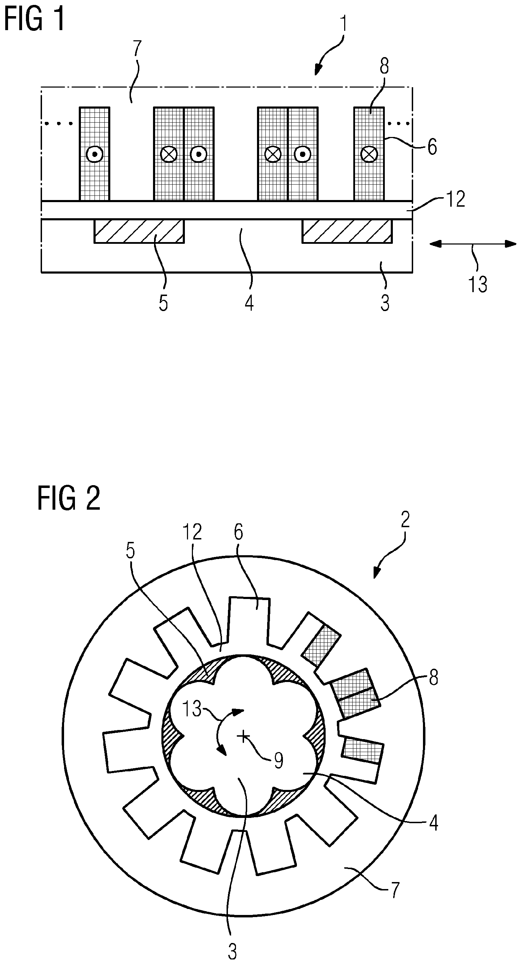

FIG 1 zeigt in prinzipieller Darstellung einen Reluktanzlinearmotor 1, der einen Stator 7 mit einem Wicklungssystem 8, aufweist, das in Nuten 6 des Stators 7 angeordnet ist. Das Wicklungssystem 8, ist in diesem Fall mit Zahnspulen ausgeführt, eine Spule umfasst somit jeweils einen Zahn.

Der Läufer 3 des Reluktanzlinearmotors 1 ist eben ausgeführt und weist in seiner Bewegungsrichtung 13 zu einem Luftspalt 12 weisende Abschnitte auf, die zum einen als magnetische Abschnitte 4 und amagnetische Abschnitte 5 ausgeführt sind. Die Bleche des Läufers 3 der magnetischen Abschnitte sind ferromagnetisch und die Bleche mit amagnetischen Abschnitten sind in ihrer vom Luftspalt 12 abgewandten Seite ferromagnetisch, in ihrer dem Luftspalt 12 zugewandten Seite amagnetisch.

Es stellen sich hier ebenfalls d- und q-Achsen ein.

Auf die magnetischen und amagnetischen Abschnitte 4, 5 wird im Folgenden noch näher eingegangen.

FIG 2 zeigt einen rotatorischen Reluktanzmotor 2, der einen Stator 7 aufweist in dessen Nuten 6 ein Wicklungssystem 8 angeordnet ist.

Sowohl dieses Wicklungssystem 8 des rotatorischen Reluktanzmotors als auch des Reluktanzlinearmotors 1 kann aus Zahnspulen bestehen, wie in FIG 1 prinzipiell dargestellt. Dieses Wicklungssystem 8 kann auch aus gesehnten Wicklungen aufgebaut sein.

Der Läufer 3 weist in Bewegungsrichtung 13, also in Rotationsrichtung wiederum unterschiedliche Abschnitte auf. Es sind dort ebenfalls magnetische Abschnitte 4 angeordnet, die sich mit amagnetischen Abschnitten 5 abwechseln.

Die magnetischen und amagnetischen Abschnitte 4, 5 weisen unterschiedliche magnetische Widerstände auf, die für das Betriebsverhalten eines Reluktanzmotors wesentlich sind. Durch diese Abschnitte wird in diesem Fall ein sechspoliger Läufer 3 gebildet.

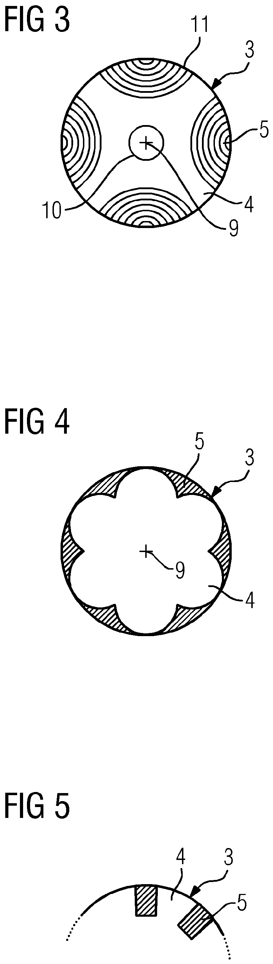

Erfindungsgemäß werden nun, wie in den Ausführungsbeispielen gemäß FIG 3 bis FIG 5 dargestellt, die Abschnitte eines Läufers 3 dadurch gebildet, dass stoffschlüssig vorgegebene Bereiche des Läufers, also der jeweiligen Bleche mit einem amagnetischen Material dotiert sind. Dies kann beispielsweise, wie in FIG 3 gezeigt zu Halbschalenanordnungen führen, die wiederum den magnetischen Widerstand derart beeinflussen, dass sich in Umfangsrichtung wechselnde Anisotropien einstellen. Damit werden die q- und d-Achsen des Läufers 3 ausgebildet.

Diese filigranen Strukturen sind radial betrachtet mehrlagig ausgeführt. Dabei wechseln sich in radialer Richtung amagnetische metallische Dotierungen mit dem ferromagnetischem Blech ab. Es entsteht durch diese filigranen Strukturen - in diesem Fall ein vierpoliger Läufer 3, der aufgrund der stoffschlüssigen Verbindungen auch hohen Fliehkräften ohne zusätzliche Bandage standhalten kann. Diese filigranen Strukturen behindern den magnetischen Fluss und bilden somit eine q-Achse.

Die amagnetischen Strukturen können dabei wie auch FIG 4 und FIG 5 zu entnehmen sind, unterschiedlich ausgeprägt sein. Entscheidend ist, dass diese amagnetischen Strukturen metallisch stoffschlüssig mit den magnetischen Bereichen verbunden sind.

Vorteilhafterweise sind dabei für den Läufer keine Sicherungselemente vorzusehen, die die Fliehkräfte bei höheren Drehzahlen aufnehmen, und die Herstellung eines Läufers 3 unnötig aufwändig gestalten.

Diese metallischen Stoffschlüsse werden bereits bei der Herstellung des Blechpaketes des Läufers oder sogar schon bei den einzelnen Blechen gezielt geschaffen, so dass eine nachträgliche Bearbeitung des Blechpaketes nicht mehr notwendig ist.

Für diesen metallischen Stoffschluss zwischen den amagnetischen und den magnetischen Abschnitten kommen die als Rapid-prototyping bekannten Verfahren wie Elektrostrahlschweißen, Laser Engineered Net Shaping, Laserauftragsschweißen, selektives Laserschmelzen und auch selektives Lasersintern zum Einsatz.

Die dabei sehr filigran erhaltenen Strukturen, wie beispielsweise FIG 3 und FIG 4 zu entnehmen, erlauben eine exakte Einstellung der jeweiligen Anisotropie des Läufers 3. Damit lassen sich nunmehr gezielt die Motoreigenschaften, wie z.B. die Drehmomentenwelligkeit beeinflussen. Dies führt bei höherem Wirkungsgrad der dynamoelektrischen Reluktanzmaschine zu höherer Drehzahl des Reluktanzmotors als auch zu einer Entfaltung eines vergleichsweise höheren Drehmoments.

Ein weiterer Vorteil, der insbesondere den Figuren 2 bis 5 zu entnehmen ist, besteht darin, dass der Läufer 3 nunmehr einen geometrisch runden Umfang aufweist, obwohl er aufgrund seiner magnetischen Ausführung magnetisch unrund ist. Dieser geometrisch gleichmäßige Luftspalt 12 führt zu reduzierter Luftreibung, was wiederum die Effizienz des Reluktanzmotors 2 erhöht. Es tritt somit im Betrieb kein Pumpeffekt im Luftspalt 12 des Reluktanzmotors auf, wie er beispielsweise bei gezahnten Oberflächenstrukturen von Läufern auftritt.

Die metallischen Stoffschlüsse, insbesondere die Herstellung der filigranen Strukturen beispielsweise wie in FIG 3 dargestellt werden bereits bei den einzelnen Blechen vorgenommen. Durch axiales Stapeln der Bleche erhält man dann das Blechpaket des Läufers 3 mit den q- und d-Achsen.

Strukturen gemäß FIG 4 und FIG 5 können auch nachträglich an einem bereits paketierten Blechpaket vorgenommen werden, wobei dort die Einzelbleche Ausstanzungen aufweisen, die dann von den amagnetischen Stoffen eingenommen werden die mit ihrem jeweiligen ferromagnetischen Blech stoffschlüssig über die oben genannten Verfahren gehalten und fixiert sind.

Vorteilhafterweise können nun auch Reluktanzmotoren geringer Achshöhe mit derartigen Läufern 3 ausgeführt sein, da die Stanztechnik bei im Durchmesser vergleichsweise kleinen Blechen an ihre Grenzen stößt. Durch die amagnetischen Strukturen die durch Dotierung der einzelnen Bleche geschaffen wurde, können somit diese amagnetischen Bereiche 5 auch für sehr kleine Bleche hergestellt werden.

Mit einzelnen Blechen nach FIG 3 bis 5 lassen sich auch Läufer 3 herstellen, die über ihre axiale Länge betrachtet eine Schrägung oder Staffelung der amagnetischen Bereiche 5 aufweisen. Dies geschieht in dem jedes Blech oder ein Blechpaket mit einer vorgegebenen Anzahl von Blechen, von dem axial vorhergehenden Blech oder Blechpaket um einen vorgebbaren Winkel versetzt auf einer Welle angeordnet wird.

Damit tritt eine weitere Reduktion der Rastmomente der Reluktanzmaschine 2 ein.

Durch die Anwendung des Rapid-prototyping bei Läufer 3 von Reluktanzmaschinen lassen sich somit einzelne Bleche mit derartigen eingelagerten amagnetischen Strukturen mit und ohne eine Isolierschicht herstellen. Eine anschließende Paketierung der Bleche ergibt das Blechpaket des Läufers.

Durch dieses Verfahren lässt sich auch das gesamte Blechpaket in einem Fertigungsvorgang herstellen, dabei werden dann sowohl die einzelnen amagnetischen Strukturen als auch ggf. die Isolationsschichten zwischen den einzelnen ferromagnetischen Lagen gebildet.
Die Isolationsschichten zwischen den ferromagnetischen Lagen also auch zwischen den Blechen sind zur Unterdrückung der Wirbelströme besonders vorteilhaft.
Reluktanzmaschinen mit erfindungsgemäßen Läufern 3 eignen sich aufgrund ihres erfindungsgemäßen einfachen Aufbaus insbesondere für Antriebe von straßen- und schienengebundenen Fahrzeugen, wie Elektroautos, Straßenbahnen aber auch für Fahrzeuge des Luftverkehrs wie durch Elektromotoren angetriebene Flugzeuge und Helikopter.

## Patentansprüche

1. Läufer (3) einer dynamoelektrischen Reluktanzmaschine (1,2), mit:
- einem aus ferromagnetischen Blechen axial geschichteten Blechpaket,
- mit abwechselnd magnetischen und amagnetischen Bereichen (4,5) in den Blechen dieses Blechpakets, wobei die amagnetischen Bereiche (5) durch amagnetische Strukturen realisiert sind, die mittels metallischem Stoffschluss in vorgegebenen Abschnitten der Bleche vorgesehen sind,
- **gekennzeichnet dadurch, dass** bei dem metallischen Stoffschluss, amagnetische Metallpartikel in oder an die ferromagnetischen Abschnitte eines jeden Einzelbleches dotiert werden.

2. Läufer (3) nach Anspruch 1, **dadurch gekenn- zeichnet**, dass die Bleche des Läufers (3) oder der Läufer (3) durch Rapid-prototyping hergestellt ist.

3. Dynamoelektrische Reluktanzmaschine (1,2) mit einem Läufer (3) nach Anspruch 1 oder 2, mit:
- einem Stator mit einem Wicklungssystem, das über einen Luftspalt (12) hinweg mit dem Läufer (3) elektromagnetisch wechselwirkt,
- in Bewegungsrichtung des Läufers (3) abwechselnd magnetischen und amagnetischen Bereiche (4,5), die dem Luftspalt (12) der Reluktanzmaschine zugewandt sind.

4. Dynamoelektrische Reluktanzmaschine (1,2) nach Anspruch 3, **dadurch gekennzeichnet, dass** die dynamoelektrische Reluktanzmaschine (1,2) als rotatorische Reluktanzmaschine ausgeführt ist.

5. Dynamoelektrische Reluktanzmaschine (1,2) nach Anspruch 3, **dadurch gekennzeichnet, dass** die dynamoelektrische Reluktanzmaschine (1,2) als Linearmotor ausgeführt ist.

6. Dynamoelektrische Reluktanzmaschine (1,2) nach Anspruch 3 oder 4, **dadurch gekennzeichnet,**
**dass** der Läufer (3) in Umfangsrichtung betrachtet geometrisch rund ausgeführt ist, sodass der Luftspalt (12) in Umfangsrichtung und/oder in axialer Richtung konstant ausgebildet ist.

7. Antrieb von Straßen- und schienengebundenen Fahrzeugen,
wie Elektroautos, Straßenbahnen, die mit einer dynamoelektrischen Reluktanzmaschine nach einem der vorhergehenden Ansprüche ausgestattet sind.

8. Antrieb von Flugzeugen und Helikoptern mit einer dynamoelektrischen Reluktanzmaschine nach einem der Ansprüche 1 bis 6.

## Claims

1. Rotor (3) of a dynamoelectric reluctance machine (1, 2), with:
- a laminated core layered axially from ferromagnetic sheets,
- with alternate magnetic and nonmagnetic areas (4, 5) in the sheets of this laminated core, wherein the nonmagnetic areas (5) are realised by nonmagnetic structures which are provided by means of a metallic adhesive bond in predetermined segments of the sheets,
- **characterised in that**
in the case of the metallic adhesive bond, nonmagnetic metal particles are doped in or on the ferromagnetic segments of each individual sheet.

2. Rotor (3) according to claim 1, **characterised in that** the sheets of the rotor (3) or the rotors (3) is produced by means of rapid prototyping.

3. Dynamoelectric reluctance machine (1, 2) with a rotor (3) according to claim 1 or 2, with:
- a stator with a winding system, which interacts electromagnetically with the rotor (3) through an air gap (12),
- alternate magnetic and nonmagnetic areas (4, 5), which face the air gap (12) of the reluctance machine, in the movement direction of the rotor (3).

4. Dynamoelectric reluctance machine (1, 2) according to claim 3, **characterised in that** the dynamoelectric reluctance machine (1, 2) is embodied as a rotational reluctance machine.

5. Dynamoelectric reluctance machine (1, 2) according to claim 3, **characterised in that** the dynamoelectric reluctance machine (1, 2) is embodied as a linear motor.

6. Dynamoelectric reluctance machine (1, 2) according to claim 3 or 4, **characterised in that** the rotor (3) is embodied to be geometrically round when viewed in the peripheral direction so that the air gap (12) is embodied to be constant in the peripheral direction and/or in the axial direction.

7. Drive of road and rail-bound vehicles, such as electric cars, trams, which are equipped with a dynamoelectric reluctance machine according to one of the preceding claims.

8. Drive of aircraft and helicopters with a dynamoelectric reluctance machine according to one of claims 1 to 6.

## Revendications

1. Rotor (3) d'une machine (1, 2) dynamoélectrique à réluctance, comprenant :
- un paquet de tôles feuilletées axialement composé de tôles ferromagnétiques,
- comprenant des parties (4, 5) magnétiques et amagnétiques en alternance dans les tôles de ce paquet de tôles, les parties (5) amagnétiques étant réalisées par des structures amagnétiques, qui sont prévues au moyen d'une coopération de matière métallique dans des parties données à l'avance des tôles,
- **caractérisé en ce que**
lors de la coopération de matière métallique, des particules de métal amagnétique sont mises sous forme de dopage dans ou sur les parties ferromagnétiques de chaque tôle individuelle.

2. Rotor (3) suivant la revendication 1, **caractérisé en ce que** les tôles du rotor (3) ou le rotor (3) est fabriqué par rapid prototyping.

3. Machine (1, 2) dynamoélectrique à réluctance ayant un rotor (3) suivant la revendication 1 ou 2, comprenant :
- un stator ayant un système de bobine, qui interagit électromagnétiquement avec le rotor (3) par un entrefer (12),
- des parties (4, 5) magnétiques et amagnétiques en alternance dans le sens de déplacement du rotor (3), qui sont tournées vers l'entrefer (12) de la machine à réluctance.

4. Machine (1, 2) dynamoélectrique à réluctance suivant la revendication 3,
**caractérisée en ce que** la machine (1, 2) dynamoélectrique à réluctance est réalisée sous la forme d'une machine à réluctance de rotation.

5. Machine (1, 2) dynamoélectrique à réluctance suivant la revendication 3,
**caractérisée en ce que** la machine (1, 2) dynamoélectrique à réluctance est réalisée sous la forme d'un moteur linéaire.

6. Machine (1, 2) dynamoélectrique à réluctance suivant la revendication 3 ou 4, **caractérisée**
**en ce que** le rotor est considéré dans la direction périphérique, géométriquement circulaire, de sorte que l'entrefer (12) est constant dans la direction périphérique et/ou dans la direction axiale.

7. Entraînement de véhicules routiers et sur rails, comme des automobiles électriques, des tramways, qui sont équipés d'une machine dynamoélectrique à réluctance suivant l'une des revendications précédentes.

8. Entraînement d'avions et d'hélicoptères comprenant une machine dynamoélectrique à réluctance suivant l'une des revendications 1 à 6.
